# EUROPÄISCHE PATENTSCHRIFT

(11) **EP 0 905 493 B1**
(45) Veröffentlichungstag und Bekanntmachung des Hinweises auf die Patenterteilung: **11.05.2016**
(21) Anmeldenummer: 98117908.8
(22) Anmeldetag: 22.09.1998
(51) Int. Cl.: G01K 7/16, G01K 7/18

(54) **Elektrischer Sensor, insbesondere Temperatur-Sensor, mit Leiterplatte**
Electrical sensor, especially temperature sensor, with printed circuit board
Capteur électrique, en particulier capteur de température, avec plaque à circuit imprimé

(30) Priorität: 25.09.1997 DE 19742236
(43) Veröffentlichungstag der Anmeldung: 31.03.1999
(73) Patentinhaber: Heraeus Electro-Nite International N.V., 3530 Houthalen (BE)
(72) Erfinder: Wienand, Karlheinz Dr., 63801 Aschaffenburg (DE); Hacker, Gernot, 63654 Büdingen (DE)
(74) Vertreter: Staudt, Armin Walter

(56) Entgegenhaltungen:
- EP-A- 0 726 450
- EP-A- 0 809 094
- WO-A-96/34260
- DE-A- 3 927 735
- DE-C- 3 939 165
- DE-U- 8 802 130
- DE-U- 29 504 105

## Beschreibung

Die Erfindung betrifft einen elektrischen Sensor, insbesondere Temperatur-Sensor, mit Leiterplatte, die wenigstens eine Leiterbahn auf einem Substrat mit elektrisch isolierender Oberfläche aufweist, wobei auf der Oberfläche wenigstens zwei mit der (den) Leiterbahn(en) verbundene Anschlußkontaktfelder zur elektrischen Verbindung mit Enden von Anschlußleitern eines Anschlußkabels angeordnet sind.

Aus der DE 39 39 165 C1 ist ein Temperatur-Sensor mit einer Kunststoff-Folie als Leiterptatine bekannt, deren Leiterbahnen an einem Ende mit einem als Meßwiderstand dienenden Keramikplättchen mit dünnem Metallüberzug als Widerstandsschicht verbunden sind; die Leiterbahnen sind an dem dem Widerstand abgekehrten Ende der Kunsistoff-Folie mit Lötkontakten versehen, die mit Anschlüssen eines Klemmträgers oder mit Leitungen eines nach außen führenden Anschtußkabels elektrisch verbunden sind; dabei ist es auch möglich, anstelle von nebeneinander liegenden Leiterbahnen auch Leiterbahnen vorzusehen, die sich auf gegenüberliegenden Flächen der streitenförmigen Kunststoff-Folie befinden. Die KunststoffFolie besteht insbesondere aus Polyimid-Folie, wahrend die Leiterbahnen aus Kupfer oder KupferbasisLegierung bestehen. Es handelt sich hierbei um eine vemältnismäßig aufwendige Konstruktion, da der Sensor in ein Schutzrohr einzubringen ist, das beispielsweise aus Edelstahl besteht.

Weiterhin ist aus dem deutschen Gebrauchsmuster 295 04 105.6 ein Terrperaturfühler - insbesondere für Warmemengenmessungen bekannt, der einen elektrischen Widerstandstemperatur-Sensor mit zwei angeschlossenen isolierten Stromleitungen aufweiset wobei zwischen dem Widerstandstemperatur-Sensor und den beiden Stromleitungen eine Anschlußplatine aus schlecht wärmeleitendem Material mit darauf angeordneten. in Bezug auf den Querschnitt der Stromleitungen querschnittskleineren Stromleitfaden vorgesehen ist, deren Länge größer bemessen ist als die Läge der Anschlußplatine zwischen den an den Enden der Anschlußplatine befindlichen Anschlußstellen einerseits des Widerstandstemperatur-Sensors und andererseits der beiden Stromleitungen. Da der Kontaktschluß zwischen Stromleitungen und Stromleitfaden durch Verlöten hergestellt wird, sind derartige Temperatur-Sensoren für höhere Temperaturen im Bereich von 230°C nicht geeignet.

Weiterhin ist aus WO95/18965 ein Meßfühler für ein Meßgas mit einem metallischen Gehäuse bekannt, wobei innerhalb des Gehäuses ein Sensorelement am Ende eines Sensor-Chips mit zumindest einer elektrisch leitenden Kontaktbahn verbunden ist; am anderen Ende des Sensor-Chips sind elektrische 55 Anschlußdrähte mit dem Sensor-Chip verschweißt. wobei ein im Wesentlichen parallel zur Langserstrekkung des Rohrs sich erstreckendes Hafteteil vorgesehen ist, das mittels Metallisierung an der Unterseite des Sensor-Chips durch Laserschweißen verbunden ist. Es handelt sich hierbei um einen verhältnismäßig aufwendigen Aufbau eines Meßfühlers.

Aufgabe der Erfindung ist es, einen elektrischen Sensor mit verhältnismäßig einfachem Aufbau zu schaffen, der zur präzisen Temperaturmessung auch oberhalb 100°C geeignet ist, wobei das Herstellverfahren weitgehend automatisierbar sein soll; weiterhin sollen nach Möglichkeit SMD-Bauelemente für die Sensorfunktion eingesetzt werden.

Die Aufgabe wird durch einen Temperatur-Sensor mit den Merkmalen von Anspruch 1 gelöst.

Vorteilhafte Ausgestaltungen des Gegenstandes nach Anspruch 1 sind in den Ansprühen 2 bis 4 angegeben.

In einer bevorzugten Ausgestaltung sind beide Ansehiußkontatfelder am gleichen Ende einer langgestreckten Leiterplatte angeordnet, wobei im Bereich des den Anschlußkontaktfeldem gegenüberliegenden Endes der Leiterplatte ein Bauelement vorgesehen ist, das durch wenigstens zwei Kontakte über Anschlußfelder mit jeweils einer Leiterbahn verbunden ist; zur Kontaktierung des Bauelements mit den Leiterbahnen sind zwei in einer Ebene liegende Ar>s;chlußielder vorgesehen, von denen eins mittels Köntaktdurchführung durch die Leiterplatte hindurch mit der auf der gegenüberliegenden Seite der Leiterplatte befindlichen Leiterbahn elektrisch verbunden ist; dabei sind die Kontakte des Bauelements durch eine Schmelzverbindung mit den Anschlußfeldern verbunden. Als elektrische Bauelement wird vorzugsweise ein Temperatur-Sensor eingesetzt.

Ein besonderer Vorteil ist in der sehr einfachen und daher automatisierbaren Bearbeitung eines Kabelsensors zu sehen, welcher aus einem Kabel und dem Sensoraufbau aus Mikrochip, Anschlüssen sowie Schutzhülse besteht

In einer vorteilhaften Ausgestaltung des Gegenstandes der Erfindung ist die Leiterbahn wenigstens im Bereich der Anschtußkontaktfelder als Ebene ausgebindet; das Substrat besteht dabei aus temperaturbeständiger, Materialien, insbesondere aus Epoxid. Triazinen, Glas oder Aluminiumoxid.

In einer bevorzugten Ausgestaltung ist auf die Leiterplatte eine hochtemperaturbeständige Schutzhülle aufgeschoben.

Als vorteilhaft erweist es sich, daß durch diese Schutzhülle eine erhöhte elektrische Spannungsfestigkeit erzielt wird.

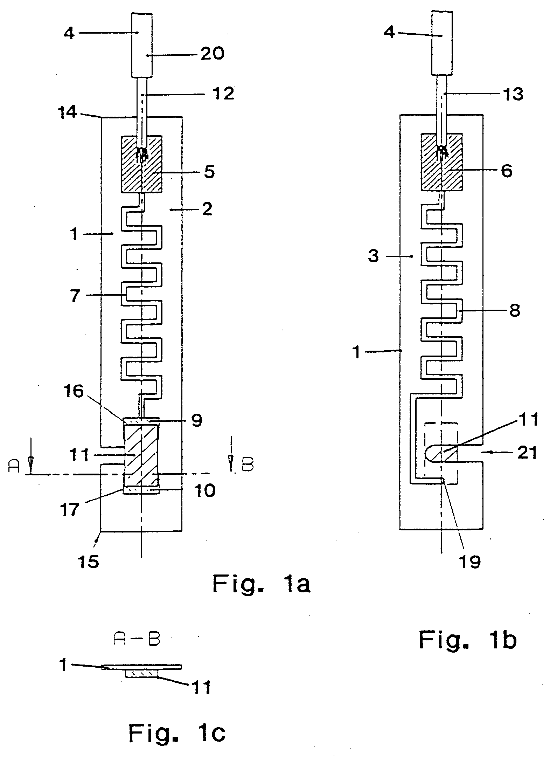

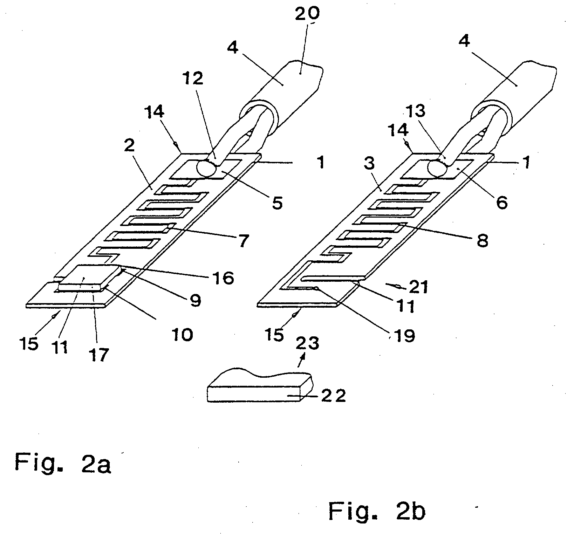

Im folgenden ist der Gegenstand der Erfindung anhandder Figuren 1a, 1b, 1c sowie 2a, 2b näher erläutert
Figur 1a zeigt die Vorderseite der Leiterplatte.
Figur 1b deren Rückseite, wobei Leiterbahn und Anschlußkontaktfeld ähnlich wie auf der Vorderseite der Leiterplatte gemäß Figur 1a ausgestaltet sind.
Figur 1c eine Profilansicht entlang der Linie AB der Figur 1a gesehen.
Figur 2a zeigt in einer perspektivischen Darstellung die Vorderseite der Leiterplatte mit einem aufgebrachten Bauelement als Sensoranordnung,
Figur 2b die Rückseite der Sensor-Anordnung mit Leiterplatte;
in Figur 2b ist zusätzlich eine gebrochene Darstellung einer Schutzhülle für die Leiterplatte gezeigt.

Gemäß Figur 1a befindet sich eine erste Leiterbahn 7 auf der Vorderseite 2 der Leiterplatte 1, die aus einem elektrisch isolierenden Substrat auf der Basis von temperaturbeständigen Materialien wie beispielesweise Epoxid, Triazinen Glas oder Aluminiumoxid besteht Leiterbahn 7 ist im Bereich des oberen Endes 14 der Leiterplatte 1 mit einem Anschlußkontaktfeld 5 verbunden, welches zum Auflöten bzw. Aufschweißen von Enden von Anschlußleitern 12 dient, die mit ihrem abisolierten Ende aus einem hier symbolisch dargestellten Kabelmantel 20 eines Anschlußkabels 4 herausragen; das Anschlußkontaktfeld weist eine Dicke im Bereich von 5 µm bis 500 µm auf. Die Leiterbahn 7 weist eine Dicke im Bereich von 5 um bis 100 µm auf und ist in der Draufsicht mäanderförmig verlaufend gestaltet Aufgrund der Mäanderform läßt sich ein verhältnismäßig hoher Wärmewiderstand zwischen dem Anschlußkontaktfeld 5 und dem Anschluß 9 für das elektrische bzw elektronische Bauelement 11 am entgegengesetzten Ende 15 erzielen. Bauelement 11 ist mittels seiner Kontakte 16 und 17 mit den Anschlußfeldem 9, 10 der Leiterplatte durch eine Schmelzverbindung, vorzugsweise durch Verlöten im ReflowVerfahren verbunden.

Gemäß Figur 1 b ist auf der Rückseite 3 der Leiterplatte 1 ein weiteres Anschlußkontaklfeld 6 für ein zweites Anschlußleiter-Ende 13 vorgesehen, wobei das Anschlußkontaktfeld 6 ebenfalls mit einer mäanderförmigen Leiterbahn 8 verbunden ist, die ihrerseits wiederum Ober Kontaktdurchführung 19 mit Anschlußfeld 10 gemäß Figur 1a für die Verbindung mit Bauelement 11 verbunden ist Das Substrat 1 weist eine Dicke im Bereich von 0,1 bis 1 mm auf, während die Beschichtung der Leiterbahn 7, 8 aus Kupfer besteht und in einer bevorzugten Ausuhrungsform annähernd 35 µm dick ist.

Das Bauelement 11 ist als SMD-Chip ausgebildet, wobei es gemäß Figur 1a. 1b mit zweien seiner Kontakte 16, 17 jeweils Ober Anschlußfelder 9, 10 mit den beiden mäanderförmigen Leiterbahnen 7, 8 verbunden ist, die ihrerseits wiederum Ober Anschlußkontaktfelder 5. 6 jeweils mit dem Ende eines Anschlußleiter 12, 13 verbunden sind, welche Teil eines Anschlußkabels 4 sind. Das Substrat der Leiterplatte 1 besteht vorzugsweise aus temperaturbeständigen Materialien, wie Epoxid, Triazinen, Glas oder Aluminiumoxid einzusetzen. Als Temperatur-Sensor wird vorzugsweise eine auf einem Substrat aufgebrachte Widerstandsschicht auf Platinbasis eingesetzt, wie sie aus dem Stand der Technik, beilspielsweise aus der DT 25 27 739 A1 bekannt ist.

Gemäß Figur 2a ist Bauelement 11 nach dem SMD-Prinzip mit seinen Kontakten 16. 17 auf den Anschlußteldern 9, 10 der Leiterplatte 1 angeordnet, wobei die elektrische und mechanisch feste Verbindung vorzugsweise durch Verlöten erfolgt ist. An Anschlußteld 9 ist die mäanderförmig ausgebildete Leiterbahn 7 angeschlossen, welche aufgrund ihres verhältnismäßig langen Weges und dünnen Querschnitts für eine gute Wärmeisolation zwischen dem als Sensor dienenden Bauelement 11 und dem Anschlußkontaktfeld 5 sorgt Auf dem Anschlußkontaktfeld 5 liegt das abisolierte Ende des Anschlußleiterendes 12 eines Anschlußkabels 4 auf, welches durch eine Schmelzverbindungvorzugsweise durch Verlöten - mit Anschlußkontaktfeld 5 verbunden ist

Anhand Figur 2b ist die auf der Rückseite 3 der Leiterplatte 1 befindlichen mäanderförmige Leiterbahn 8 erkennbar, die ebenfalls aufgrund ihrer Mäanderstruktur und ihres dünnen Leiterquerschnitts für eine hohe thermische Isolierung zwischen der Kontaktdurchführung 19 für Anschlußfeld 10 des Bauelements 11 gemäß Figur 1a und dem Anschlußkontaktfeld 6 für das Anschlußleiterende 13 des Anschlußkabels 4 sorgt Die Leiterplatte 1 weist im Bereich ihrer Rückseite eine Ausnehmung 21 auf, um das als Temperatursensor dienende Bauelement 11 möglichst weitgehend der Umgebungsatmosphäre auszusetzen, mechanischen Streß durch Ausdehnungsunterschiede zu minimieren und um mögliche Flußmittelablagerungen zu vermeiden.

Es ist weiterhin möglich, gemäß Figur 2b auf die Leiterplatte 1 eine Schutzhülle 22 in Richtung des Pfeils 23 aufzuschieben, wobei hier zwecks besserer Übersicht diese Schutzhülle nur bruchstückhaft dargestellt ist; in der Praxis reicht die Schutzhülle 22 vom Ende 15 der Leiterplatte 1 bis zum entgegengesetzten Ende 14 und umfaßt dabei auch die Anschlußkontaktfelder 5 und 6 zusammen mit den Anschlußleiterenden 12 und 13 von Anschlußkabel 4.

## Patentansprüche

1. Elektrischer Temperatur-Sensor, mit Leiterplatte (1), auf die eine Schutzhülle (22) aufschiebbar ist, wobei die Leiterplatte (1) zwei Leiterbahnen (7, 8) auf einem Substrat bestehen aus Epoxid, Triazinen, Glas oder Aluminiumoxid mit elektrisch isolierender Oberfläche aufweist,
wobei direkt auf der Oberfläche wenigstens zwei mit den Leiterbahnen verbundene Anschlusskontaktfelder (5, 6) am gleichen Ende (14) einer langgestreckten Leiterplatte (1) zur elektrischen Verbindung mit Enden von Anschlussleitern (12, 13) eines Anschlusskabels (4) angeordnet sind,
wobei im Bereich des den Anschlusskontaktfeldern (5, 6) gegenüberliegenden Endes (15) der Leiterplatte (1) ein SMD-Chip (11) der ein Temperatur-Sensor ist, durch wenigstens zwei Kontakte (16, 17) über Anschlussfelder (9, 10) mit jeweils einer der Leiterbahnen (7, 8) verbunden ist
und wobei die zwei Anschlusskontaktfelder (5, 6) zur Verbindung mittels Schmelzvorgang mit den Anschlussleiterenden (12, 13) vorgesehen sind,
wobei eines der Anschtusskontaktfelder (5) auf der Vorderseite (2) und eines der Anschlusskontaktfelder (6) auf der Rückseite (3) der Leiterplatte platziert sind, und die Leiterplatte zur Kontaktierung des SMD-Chips (11) mit den Leiterbahnen (7, 8) zwei in einer Ebene liegende Anschlussfelder (9, 10) aufweist, von denen eines mittels Kontaktdurchführung (19) durch die Leiterplatte (1) hindurch mit der auf der gegenüberliegenden Seite (3) der Leiterplatte (1) befindlichen Leiterbahn (8) elektrisch verbunden ist.

2. Elektrischer Sensor nach Anspruch 1, **dadurch gekennzeichnet, dass** die Leiterbahnen (7, 8) wenigstens im Bereich der Anschlusskontaktfelder (5, 6) als Ebene ausgebildet sind.

3. Elektrischer Sensor nach einem der Ansprüche 1 oder 2, **dadurch gekennzeichnet, dass** die Kontakte (16, 17) des SMD-chips (11) durch eine Schmelzverbindung mit den Anschlussfeldern (9, 10) verbunden sind.

4. Elektrischer Sensor nach einem der Ansprüche 1 bis 3, **dadurch gekennzeichnet, dass** auf die Leiterplatte eine hochtemperaturbeständige Schutzhülle (22) aufgeschoben ist.

## Claims

1. An electrical temperature sensor, with printed circuit board (1), onto which a protective cover (22) is slidable, wherein the printed circuit board (1) comprises two conductor paths (7, 8) on a substrate consisting of epoxide, triazines, glass or aluminum oxide with an electrically insulating surface,
wherein, directly on the surface, at least two connection contact fields (5, 6) connected to the conductor paths are arranged at the same end (14) of an elongated printed circuit board (1) for electrical connection with ends of connecting conductors (12,13) of a connection cable (4),
wherein in the area of the end (15) of the printed circuit board (1) which is opposite to the connection contact fields (5, 6), an SMD chip (11), which is a temperature sensor, is connected by at least two contacts (16, 17) via connection fields (9, 10) to a respective one of the conductor paths (7,8), and wherein the connection contact fields (5, 6) are provided for connection by way of a melting process to the connecting conductor ends (12, 13),
wherein one of the connection contact fields (5) is placed on the front side (2) and one of the connection contact fields (6) on the back side (3) of the printed circuit board, and the printed circuit board for contacting the SMD chip (11) with the conductor paths (7, 8) comprises two connection fields positioned in a plane, of which one is electrically connected by way of contact feedthrough (19) through the printed circuit board (1) to the conductor path (8) which is positioned at the opposite side (3) of the printed circuit board (1).

2. The electrical sensor according to claim 1, **characterized in that** that the conductor paths (7, 8) are formed at least in the area of the connection contact fields (5, 6) as a plane.

3. The electrical sensor according to any one of claims 1 or 2, **characterized in that** the contacts (16, 17) of the SMD chip (11) are connected by way of a fusion bond to the connection fields (9, 10).

4. The electrical sensor according to any one of claims 1 to 3, **characterized in that** a high temperature-resistant protective cover (22) is slid onto the printed circuit board.

## Revendications

1. Sonde de température électrique, avec un circuit imprimé (1), sur lequel une gaine de protection (22) peut être mise, le circuit imprimé (1) comprenant deux pistes conductrices (7, 8) sur un substrat composé d'époxyde, de triazines, de verre ou d'oxyde d'aluminium avec une surface électriquement isolée, au moins deux champs de contact (5, 6) étant disposés directement sur la surface à la même extrémité (14) d'une piste conductrice allongée (1) pour la connexion électrique aux extrémités de conducteurs de raccordement (12, 13) d'un câble de raccordement (4), une puce SMD (11), qui est une sonde de température, étant reliée dans la zone de l'extrémité (15) de la piste conductrice (1), extrémité opposée aux champs de contact de raccordement (5, 6), par au moins deux contacts (16, 17) sur des champs de raccordement (9, 10) à respectivement l'une des pistes conductrices (7, 8),
et les deux champs de contact de raccordement (5, 6) étant prévus pour la connexion aux extrémités conductrices de raccordement (12, 13) par soudure,
l'un des champs de contact de raccordement (5) étant placé sur la face avant (2) et l'un des champs de contact de raccordement (6) sur la face arrière (3) et la piste conductrice présentant deux champs de raccordement (9, 10) se trouvant dans le même plan pour établir le contact avec la puce SMD (11) avec les pistes conductrices (7, 8), l'un des champs étant relié électriquement à la piste conductrice (8) se trouvant sur la face (3) opposée du circuit imprimé (1) en traversant (19) le circuit imprimé (1).

2. Sonde électrique selon la revendication 1, **caractérisée en ce que** les pistes conductrices (7, 8) sont réalisées comme un plan au moins dans la zone des champs de contact de raccordement (5, 6).

3. Sonde électrique selon l'une des revendications 1 ou 2, **caractérisée en ce que** les contacts (16, 17) de la puce SMD (11) sont reliés par soudure aux champs de raccordement (9, 10).

4. Sonde électrique selon l'une des revendications 1 à 3, **caractérisée en ce qu'**une gaine de protection (22) hautement résistante aux températures est placée sur le circuit imprimé.
